# EUROPEAN PATENT APPLICATION

(11) **EP 1 562 306 A1**
(43) Date of publication of application: **10.08.2005**
(21) Application number: 04290328.6
(22) Date of filing: 09.02.2004
(51) Int. Cl.: H04B 7/04, H04Q 7/36, H04Q 7/38

(54) **Fast beam selection with macrodiversity**

(71) Applicant: ALCATEL, 75008 Paris (FR)
(72) Inventor: Braun, Volker, 70178 Stuttgart (DE); Zeller, Dietrich, 71067 Sindelfingen (DE); Hoek, Cornelis, 71732 Tamm (DE)
(74) Representative: Brose, Gerhard

(57) **Abstract**

A method for selecting and communicating through primary beams (B2, B4, B5) of at least two cells of an active set of cells (C1 to C3) simultaneously communicating with a mobile station (UE), in a wireless cellular communications system in which at least a base station (NB1, NB2) having beamforming capabilities transmits data and control information to a mobile station (UE) through said primary beams in a macro-diversity communication scenario, the method comprising the steps of: signaling a list of candidate communication beam identifiers (BID1 to BID6) for each cell of the active set (C1 to C3) to the mobile station (UE); the mobile station (UE) performing measurements of pilot signals from every beam of the list in order to quantify the transmission quality per beam; based on such measurements, selecting the primary beam of the cells (B2, B4, B5) in the active set (C1 to C3) and signaling the beam identifier (BID2, BID4, BID5) said primary beam of the cells to the base station (NB1, NB2); the base station, based on the beam identifier information received, transmitting data and control information to the mobile station (UE) through said primary beams of the cells (B2, B4, B5) in the active set (C1 to C3).

## Description

The present invention relates to the field of wireless cellular telecommunication systems, and more particular to beam selection.

Conventional mobile cellular systems usually apply sectorized base stations. Each sector is covered by a single antenna beam in both uplink and downlink directions. In the 3GPP standard, on the other hand, and more particularly, in document 3G TR 25.887 v1.0.0 (2001-12), beamforming using multiple downlink beams per sector is considered, in which the same or different scrambling codes can be used for the beams. It is also suggested that a base station can operate with "flexible beam" or "grid of fixed beams" beamforming modes.

In the "fixed grid" beamforming scenario, in which the uplink and downlink beams are formed in such a way that the beam directions are fixed, the network needs to determine in which beam the mobile station is located and provide appropriate and efficient signaling to allow that the mobile station and the network agree on a beam to be used for downlink radio transmission. The more accurate the determination and the faster the signaling is, the higher the gains in system capacity will be.

3GPP document R1-03-0739, *"Fast Beam Selection", New York, August 25-29,* 2003, which is considered the closest state of the art, proposes a solution which enables fast beam selection by using physical layer signaling. In this solution, the mobile station selects a best beam among a set of candidate beams to be used for downlink transmission, based on measurements of the secondary common pilot channel (S-CPICH) signals of the candidate beams. To inform the base station about the selected beam, a beam identifier is transmitted by the user equipment in the uplink dedicated physical control channel (DPCCH).

The solution described in document RP-03-0739 is primarily designed for the case where the mobile station is communicating with only one radio cell of the radio access network. But in the UMTS Terrestrial Radio Access Network (UTRAN) a mobile station may simultaneously be communicating with two or more overlapping radio cells. This scenario, in which a mobile station can send/receive information towards/from more than one radio cell is known as "macro-diversity".

The object of the invention is therefore to provide an improved method for fast beam selection which enables macro-diversity methods.

Of particular interest for the invention is the macro-diversity case in which the mobile station simultaneously communicates with two or more cells belonging to the same or different base stations. In such a case, two macro-diversity methods are adopted by 3GPP (TR 25.922 v2.0.0, 1999-12), which are, Soft Handover (SHO) and Site Selection Diversity Transmission (SSDT). Also, because of the downlink is more likely to be the bottleneck of the system capacity because of the asymmetric nature of new services, such as the Internet traffic, the system level performance of macro-diversity in the downlink needs to be improved.

By applying the fast beam selection method of the invention, said macro-diversity methods (SHO and SSDT) will provide an optimal gain in the downlink.

The object is achieved according to the invention by a method for selecting and communicating through primary beams of at least two cells of an active set of cells simultaneously communicating with a mobile station, in a wireless cellular communications system comprising at least a base station having beamforming capabilities according to claim 1 and claim 8.

The object is also achieved by a mobile station for a wireless cellular telecommunication system according to claim 11; a base station for a wireless cellular telecommunication system having beamforming capabilities according to claim 12; and a computer program product for selecting primary beams of a base station in a wireless cellular telecommunication system according to claim 13.

Advantageous configurations of the invention emerge from the dependent claims, the following description and the drawings.

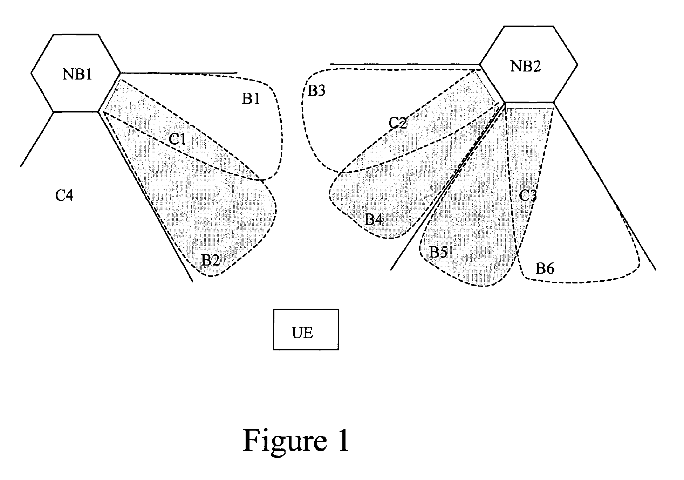

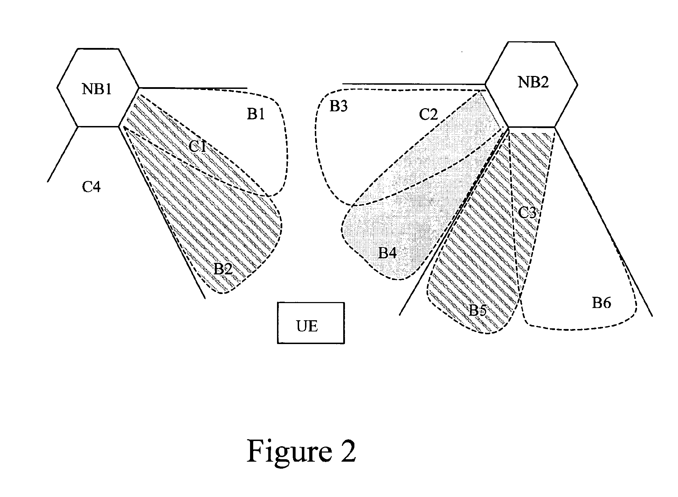

An embodiment example of the invention is now explained with the aid of Figures 1 and 2.

Figure 1 shows an example of a macro-diversity scenario coherent with SHO.

Figure 2 shows an example of a macro-diversity scenario coherent with SSDT.

Figure 1 shows an example of a macro-diversity scenario coherent with SHO in which a mobile station UE simultaneously communicates with three cells C1 to C3 belonging to two base stations NB1, NB2. The two base stations have antennas with fixed grid beamforming capabilities. In the example considered here the coverage of each base station is geographically divided in 6 sectors, each sector having a cell, and in every sector/cell two fixed beams are available for downlink transmission. For the sake of simplification, Figure 1 only shows four cells C1 to C4 and six fixed beams B1 to B6.

The three cells C 1 to C3 constitute the "active set" of cells which simultaneously transmit data/control information on a downlink data/control channel to the mobile station UE. In the example of Figure 1 we assume that, per cell of the active set C1 to C3, only one beam can be used at a time for data/control downlink transmission, that is, three beams B2, B4, B5 are the best suitable for communication with the mobile station UE. The mobile station UE thus receives three different radio links (RL), each of these RLs being transmitted in a different beam and uses coherent soft combining to retrieve the data transmitted on the data channel. Also, in every beam of the active set B1 to B6, beam pilot information is transmitted in a way to characterize the propagation conditions in the beam.

According to the current invention then, there is a need to provide a method for selection of one beam per cell, hereinafter defined as the "primary beam of the cell" B2, B4, B5 of the active set C1 to C3, through which the base station NB1, NB2 will transmit data and control information. For such purpose, a beam identifier BID1 to BID6 is assigned, preferably by a radio network controller (RNC) attached to the base stations NB1, NB2, to every beam of the active set B1 to B6. The assignment shall be done in a way to enable the identification of a specific beam and the cell of the active set to which the beam belongs.

The method according to the invention for selecting a primary beam per cell B2, B4, B5 of the active set C1 to C3 through which the base station NB1, NB2 will transmit data and control information to a mobile station UE in a macro-diversity scenario coherent with SHO comprises the steps of:
1. For each cell in the active set C1 to C3, candidate communication beam identifiers BID1 to BID6 are signaled to the mobile station UE.
2. The mobile station UE performs a measurement for every beam signaled to it B1 to B6 in order to quantify the transmission quality per beam. This measurement process is repeated periodically.
3. Based on these measurements, and for each cell in the active set C1 to C3, the mobile station UE selects and signals a primary beam of cell identifier BID2, BID4, BID5. This signaling process is repeated periodically.
4. Each cell in the active set C1 to C3 detects the uplink signaling message transmitted by the mobile station UE and identifies the primary beam of the cell B2, B4, B5 for downlink transmission in that cell. Then, the base station NB1, NB2 starts transmitting data and control information through said primary beam of the cell B2, B4, B5.

In step 1, the candidate beams may be all the beams B1 to B6 available in the active set. In a preferred implementation these beam identifiers BID1 to BID6 are assigned and signaled by the RNC to the base station and the mobile station. Alternatively, only a suitable subset of all the beams in the active set can be signaled to the mobile station. Such a subset can be found e.g. by utilizing geographical information about the beam pointing directions. As already mentioned above, said beam identifier BID1 to BID6 shall enable the identification, explicit or implicit, of a specific beam and the cell of the active set to which the beam belongs. The signalling to define a candidate beam comprises a beam identifier for the candidate beam, scrambling and channelization codes of the common pilot channels assigned to the candidate beam, and the radio link parameters to be used for transmission with the candidate beam.

Beam pilot information is used as a phase reference by the mobile station UE as a basis for measurements in step 2. In a preferred implementation, a common pilot channel is transmitted per beam to provide the pilot signals for the candidate beams, but, alternatively, dedicated pilot information within a beam can be transmitted to the mobile station UE on the control channel. Then such a measurement is preferably based on the common pilot channel transmitted per beam, but it can be based on the dedicated pilot information transmitted on the control channel. Preferably, the common pilot channel is a secondary common pilot channel (S-CPICH) or a primary common pilot channel (P-CPICH).

In step 3, signaling of the primary beam of cell identifier BID2, BID4, BID5 is done preferably on the uplink control channel, this identifier indicating the best beam (primary beam) B2, B4, B5 for downlink transmission in each cell of the active set C 1 to C3.

In step 4, the base station transmits data and control information only through the primary beams B2, B4, B5 of the cells of the active set C 1 to C3. The other non-primary beams B1, B3, B6 of each cell of the active set are switched off for data and control transmission to the mobile station UE.

Preferably physical layer signaling is used to indicate the primary beam of the cell B2, B4, B5 of the active set to the base station NB1, NB2. Also in a preferred embodiment of the invention, the mobile station UE receives data on a dedicated physical data channel (DPDCH) and control information on a dedicated physical control channel (DPCCH) on all the three radio links, each being transmitted in a different primary beam B2, B4, B5 of the cell of the active set.

For the sake of completion, the scenario of Figure 1 is further explained by describing how the mobile station detects the signal received and controls the downlink power for the different radio links.

Signal detection: the mobile station UE simultaneously receives N radio links transmitted in N different beams, N being the number of primary beams B2, B4, B5 of the cells of active set (N=3 in the example of Figure1). The mobile station UE is aware of the beam transition timing and selects the phase references and other transmission parameters, e.g. scrambling codes, accordingly, for example, a phase reference and other transmission parameters can be updated at a predefined time after transmission of the respective BID. For each of the N received signals, the mobile station UE performs channel estimation, the channel estimation being assisted by the common pilot channel (or the DPCCH) transmitted per beam. The UE then coherently combines the N data signals to obtain a reliable estimate of the transmitted channel bits. The output after coherent combining is fed to the symbol level processing to receive a reliable estimate of the transmitted user data.

Downlink Power Control: in a preferred embodiment, the mobile station UE shall further send a power control command to the cells of the active set C1 to C3 in order to control the downlink transmit power for the different radio links. This can be done, for example, by generating a power control command based on an estimate of the signal-to-noise and interference ratio (SIR) computed from the downlink signals received in the N primary beams of the cells B2, B4, B5 of the active set, one beam per cell of the active set. This SIR estimate is computed based on the pilot parts of the DPCCHs of the primary beams of the cells in the active set.

Figure 2 shows an example of a macro-diversity scenario coherent with SSDT in which a mobile station UE simultaneously communicates with three cells C1 to C3 belonging to two base stations NB1, NB2. The two base stations have antennas with fixed grid beamforming capabilities. In the example considered here the coverage of each base station is geographically divided in 6 sectors, each sector having a cell, and in every sector/cell two fixed beams are available for downlink transmission. For the sake of simplification, Figure 2 only shows four cells C1 to C4 and six fixed beams B1 to B6.

The three cells C1 to C3 constitute the "active set" of cells which simultaneously transmit "control" information on a downlink control channel to the mobile station UE. As opposed to the scenario of Figure 1, in a macro-diversity SSDT scenario, an example of which is shown in Figure 2, transmission of "data" is done only through the best cell C2, called "primary cell", of the active set C1 to C3 only, and data transmission is switched off in the other (non-primary) cells C1, C3 of the active set in order to reduce interference.

In the example of Figure 2 we assume that, per cell of the active set C1 to C3, only one beam can be used at a time for data/control downlink transmission that is, three beams B2, B4, B5 are the best suitable for communication with the mobile station UE. The mobile station UE receives in this case three different radio links (RL) transporting control information, each of these RLs being transmitted in a different beam B2, B4, B5 and only one of said radio links in one of the beams B4 transports data information. Also, in every beam of the active set B1 to B6, beam pilot information is transmitted in a way to characterize the propagation conditions in the beam.

Also according to the current invention then, there is a need to provide a method for selection of one beam per cell, hereinafter defined as the "primary beam of the cell" B2, B4, B5 of the active set, through which the base station NB1, NB2 will transmit "control" information and for selection of one beam of the active set B1 to B6, hereinafter defined as "primary beam of the active set" B4, through which the base station NB2 will transmit, additionally to control information, "data" information.

For such purpose, a beam identifier BID1 to BID6 is assigned, preferably by a radio network controller (RNC) attached to the base stations, to every beam of the active set B1 to B6. The assignment shall be done in a way to enable the identification of a specific beam and the cell of the active set to which the beam belongs. Further, in order to be able to indicate to the base station which one of all the beams of the active set B1 to B6 is the "primary beam of the active set" B4, a "primary beam indicator" (PBI) additionally to the beam identifier BID1 to BID6 can be assigned. The PBI may have only two values, 1 or 0, for example, message with PBI =1 indicates primary beam of the active set as opposed to PBI=0. Then for each cell in the active set, the mobile station UE signals a beam identifier/primary beam indicator message pair such that exactly one of the signaled PBI messages is PBI=1, and all other messages are PBI=0. Alternatively to the PBI, there could be another way to explicitly indicate to the base station which of the beams of the active set B1 to B6 is the primary beam of the set B4, for example, a "beam quality indicator" (BQI) to indicate the beam quality could also be additionally assigned, for example, BQ1= 1,2, etc. indicates best, second best, etc. beam in the active set. The beam with BQI=1 being the primary beam of the active set B4. Still another way to indicate the primary beam of the active set B4 without sending explicit signaling messages, is by implicitly indicating this by, for example, defining a predefined order of transmission of the beam identifier BID messages. For example, by sending a sequence BID4, BID2, BID5 the mobile station UE indicates that beam B4 is the primary beam of the active set and beams B4, B2, B5 are the primary beams of the cells of the active set.

The method according to the invention for selecting a primary beam per cell B2, B4, B5 of the active set C1 to C3 through which the base station NB1, NB2 will transmit control information and for selecting a primary beam of the active set B4 through which the base station NB2 will transmit, additionally to control information, "data" information, in a macro-diversity scenario coherent with SSDT comprises the steps of:
1. For each cell in the active set C1 to C3, candidate communication beam identifiers BID1 to BID6 are signaled to the mobile station UE.
2. The mobile station UE performs a measurement for every beam signaled to it B1 to B6 in order to quantify the transmission quality per beam. This measurement process is repeated periodically.
3. Based on these measurements, and for each cell in the active set C1 to C3, the mobile station UE selects and signals a primary beam of cell identifier BID2, BID4, BID5 and a primary beam of the active set indicator. This signaling process is repeated periodically.
4. Each cell in the active set C1 to C3 detects the uplink signaling message transmitted by the mobile station UE and identifies the primary beam of cell B2, B4, B5 and the primary beam of the active set B4. Then, the base station NB1, NB2 starts transmitting control information through said primary beam of the cell B2, B4, B5 and data information through said primary beam of the active set B4.

In step 1, the candidate beams may be all the beams B1 to B6 available in the active set. In a preferred implementation these beam identifiers BID1 to BID6 are assigned and signaled by the RNC to the base station and the mobile station. Alternatively, only a suitable subset of all the beams in the active set can be signaled. Such a subset can be found e.g. by utilizing geographical information about the beam pointing directions. As already mentioned above, said beam identifier BID1 to BID6 shall enable the identification, explicit or implicit, of a specific beam and the cell of the active set to which the beam belongs. The signalling to define a candidate beam comprises a beam identifier for the candidate beam, scrambling and channelization codes of the common pilot channels assigned to the candidate beam, and the radio link parameters to be used for transmission with the candidate beam.

Beam pilot information is used as a phase reference by the mobile station UE as a basis for measurements in step 2. In a preferred implementation, a common pilot channel is transmitted per beam to provide the pilot signals for the candidate beams, but, alternatively, dedicated pilot information within a beam can be transmitted to the mobile station UE on the control channel. Then such a measurement is preferably based on the common pilot channel transmitted per beam, but it can be based on the dedicated pilot information transmitted on the control channel. Preferably, the common pilot channel is a secondary common pilot channel (S-CPICH) or a primary common pilot channel (P-CPICH).

In step 3, signaling of the primary beam of cell identifier BID2, BID4, BID5 is done preferably on the uplink control channel, this identifier indicating the best beam (primary beam) B2, B4, B5 for downlink transmission in the each cell of the active set C1 to C3. The primary beam of the active set indicator can be implicitly or explicitly signaled as already explained above, that is, by sending explicit message pairs (BID2/PBI=0, BID4/PBI=1, BID5/PBI=0; or BID2/BQ1 =3, BID4/BQI= 1, BID5/BQ1=2) or an implicit sequence indication (BID4, BID5, BID2).

In step 4, the base station transmits control information only through the primary beams of the cells B2, B4, B5 of the active set C1 to C3 and data information through the primary beam of the active set B4. The other non-primary beams of the cells B1, B3, B6 are switched off for control information transmission, and the other non-primary beams of the active set B1, B2, B3, B5, B6 are also switched of for data information transmission to the mobile station UE.

Preferably physical layer signaling is used to indicate the primary beam of the cell B2, B4, B5 of the active set and the primary beam of the active set B4 to the base station NB1, NB2. Also in a preferred embodiment of the invention, the mobile station UE receives data on a dedicated physical data channel (DPDCH) and control information on a dedicated physical control channel (DPCCH) on the radio links.

For the sake of completion, the scenario of Figure 2 is further explained by describing how the mobile station detects the signal received and controls the downlink power for the different radio links.

Signal detection: the mobile station UE receives N RLs transmitted in N different beams, N being the number of primary beams of the cells B2, B4, B5 of the active set (N= 3 in the example of Figure 2), but in only one of the N RLs data information is transmitted at a time. The mobile station UE is aware of the beam transition timing and selects the phase references and other transmission parameters, e.g. scrambling codes, accordingly, for example, a phase reference and other transmission parameters are updated at a predefined time after transmission of the respective BID/PBI pair. For each of the N received signals, the UE performs channel estimation, the channel estimation being assisted by the common pilot channel (or the DPCCH) transmitted per beam. Detection of the data signal is done by using as phase reference the S-CPICH of the beam in which the data signal is transmitted, i.e., the S-CPICH of the primary beam of the active set B4.

Downlink Power Control: In a preferred embodiment, the mobile station UE shall further send a power control command to the cells of the active set C1 to C3 in order to control the downlink transmit power for the different radio links. This can be done, for example, by generating a power control command based on an estimate of the signal-to-noise and interference ratio (SIR) computed from the downlink signals in the primary beam of the active set B4. This SIR estimate is computed based on the pilot part of the DPCCH of the primary beam of the active set 84.

The present invention requires that the mobile station UE has certain capabilities as regards the beam selection. In case legacy mobile stations UE are used in the telecommunication system, the base station NB1, NB2 uses an alternative transmission scheme for the legacy mobile stations UE.

In accordance with a preferred embodiment of the invention a radio network controller informs the base station NB1, NB2 which transmission scheme to use for which one of the mobile stations UE and also which antennas are to be used. In a scenario where a mixture of legacy mobile stations and mobile stations supporting beam selection according to the present invention is used, a radio network controller informs the base station to use a method of the present invention for the mobile stations which support the beam selection and to use an alternative transmission scheme for the legacy mobile stations.

## Claims

1. A method for selecting and communicating through primary beams of at least two cells (B2, B4, B5) of an active set of cells (C1 to C3) simultaneously communicating with a mobile station (UE), in a wireless cellular communications system in which at least a base station (NB1, NB2) having beamforming capabilities will transmit data and control information to a mobile station (UE) through said primary beams in a macro-diversity communication scenario, the method comprising the steps of:
- signaling a list of candidate communication beam identifiers (BID1 to BID6), for each cell of the active set (C1 to C3), to the mobile station (UE),
- the mobile station (UE) performing measurements of pilot signals from every beam of the list in order to quantify the transmission quality per beam,
- based on such measurements, selecting the primary beam of the cells (B2, B4, B5) in the active set (C1 to C3) and signaling the beam identifier (BID2, BID4, BID5) said primary beam of the cells to the base station (NB1, NB2),
- the base station, based on the beam identifier information received, transmitting data and control information to the mobile station (UE) through said primary beams of the cells (B2, B4, B5) in the active set (C1 to C3).

2. The method of claim 1 **characterized in that** the candidate communication beam identifiers (BID1 to BID6) are assigned and signaled by an RNC to the base station (NB1, NB2) and the mobile station (UE).

3. The method of claim 1 **characterized in that** only a suitable subset of all the beams in the active set (B1 to B6) is signaled to the mobile station (UE), such a subset selected by utilizing geographical information about the beam pointing directions.

4. The method of claim 1 **characterized in that** the mobile station performs measurements based on a common pilot channel transmitted by the beams.

5. The method of claim 1 **characterized in that** the mobile station (UE) signals the beam identifiers (BID2, BID4, BID5) to the base station (NB1, NB2) on an uplink control channel.

6. The method of claim 1 **characterized in that** the mobile station (UE) signals the beam identifiers (BID2, BID4, BID5) to the base station (NB1, NB2) using physical layer signaling.

7. The method of claim 1 **characterized in that** non-primary beams (B1, B3, B6) of the cells of the active set (C1 to C3) are switched off for data and control transmission.

8. A method for selecting and communicating through primary beams of at least two cells (B2, B4, B5) of an active set of cells (C1 to C3) simultaneously communicating with a mobile station (UE), in a wireless cellular communications system in which at least a base station (NB1, NB2) having beamforming capabilities will transmit control information to a mobile station (UE) through primary beams of the cells (B2, B4, B5) and data information to a mobile station (UE) through a primary beam of the active set (B4), in a macro-diversity communication scenario, the method comprising the steps of:
- signaling a list of candidate communication beam identifiers (BID1 to BID6), for each cell of the active set (C1 to C3), to the mobile station (UE),
- the mobile station (UE) performing measurements of pilot signals from every beam of the list in order to quantify the transmission quality per beam,
- based on such measurements, selecting the primary beam of the cells (B2, B4, B5) and the primary beam of the active set (B4) and signaling the beam identifier (BID2, BID4, BID5) of said primary beam of the cells and an indication of said primary beam of the active set to the base station (NB1, NB2),
- the base station, based on the beam identifier information received, transmitting control information to the mobile station (UE) through said primary beams of the cells (B2, B4, B5) in the active set (C1 to C3) and transmitting data information to the mobile station (UE) through said primary beam of the active set (B4).

9. The method of claim 8 **characterized in that** the indication of the primary beam of the active set (B4) is done by signaling a "primary beam indicator" additionally to the beam identifier.

10. The method of claim 8 **characterized in that** non-primary beams (B1, B3, B6) of the cells of the active set (C1 to C3) are switched off for control transmission and that non-primary beams of the active set (B1, B2, B3, B5, B6) are switched of for data transmission.

11. A mobile station (UE) for a wireless cellular telecommunication system comprising:
- means for receiving a list of candidate communication beam identifiers (BID1 to BID6), for each cell of the active set (C1 to C3),
- means for performing measurements of pilot signals from every beam of the list in order to quantify the transmission quality per beam,
- means for selecting primary beams of the cells (B2, B4, B5) in the active set (C1 to C3) according to such pilot measurements, and
- means for signaling of the selection to the base station.

12. A base station (NB1, NB2) for a wireless cellular telecommunication system having beamforming capabilities, the base station comprising:
- means for receiving identifiers of primary beams in the active set, and
- means for switching off data and control channels to the mobile station of beams which have not been selected.

13. A computer program product for selecting primary beams of a base station (NB1, NB2) in a wireless cellular telecommunication system, the computer program product having program means for performing the steps of:
- determining the transmission quality of pilot signals which have been received by a mobile station (UE), the pilot signals being assigned to respective beams of the base station,
- selecting primary beams in the active set, based on the transmission quality of the pilot signal,
- signaling of the primary beam selection to the base station.
